# EUROPEAN PATENT APPLICATION

(11) **EP 2 446 753 A1**
(43) Date of publication of application: **02.05.2012**
(21) Application number: 10188952.5
(22) Date of filing: 26.10.2010
(51) Int. Cl.: A23L 1/236

(54) **Optimized sugar substitute composition**

(71) Applicant: Sunshine Valley International Co., Ltd, Taipei (TW)
(72) Inventor: Her, Lih-Min,, Taipei (TW)
(74) Representative: Jeannet, Olivier

(57) **Abstract**

An optimized sugar substitute composition with low glycemic index (GI) and low caloric content is disclosed for substituting for sugar and conventional artificial sweeteners. The sugar substitute composition contains siraitia grosvenorii extracts, i.e. mogrosides, including mogroside V, and erythritol that can cover a bitter after taste of mogrosides and work with mogrosides to create synergy for magnifying sweet taste. A content ratio of mogroside V to erythritol in the composition ranged between 50:50 and 0,1:99,9 is able to dilute siraitia grosvenorii extracts and create synergy to obtain the optimized sugar substitute composition with enhanced sweet taste and low GI value. The optimized sugar substitute composition can be used as good sweetener for foods, beverages, seasonings and various food additives while brings health benefits to users to upgrade the dietary quality of people in the modern society.

## Description

### FIELD OF THE INVENTION

The present invention relates to an optimized sugar substitute composition, and more particularly to a sugar substitute composition that includes components capable of creating synergy to produce increased sweet taste while has low glycemic index (GI) and is suitable for substituting currently commercially available cane sugar or artificial sweetener products.

### BACKGROUND OF THE INVENTION

A lot of people will usually add sugar or some type of artificial sugar substitute to their food, snacks, drinks or beverages, such as milk, coffee, tea and the like, to increase the sweet taste thereof. On the other hand, people in the modern society pay more and more attention to their health and are aware that high sugar ingestion is hazardous to their health. Food with excessive amount of sugar tends to cause increased intake of calories and raised blood sugar level, and becomes a main cause to various lifestyle diseases, such as obesity, diabetes, heart and vascular diseases, and various chronic diseases.

Glycemic index (GI) is a measure of the effects of carbohydrates on blood sugar levels. Carbohydrates that break down quickly during digestion and release glucose rapidly into the bloodstream have a high GI. On the other hand, carbohydrates that break down more slowly and release glucose more gradually into the bloodstream have a low GI. Food with low GI is good for most people's health. In calculation GI values, pure glucose is used as a reference food, giving it a GI value of 100 by definition. That is, the increase of blood sugar level at two hours after ingestion of 100g of pure glucose is defined as GI=100 and used as a reference in calculating the GI values of other foods. The GI value of any food other than the pure glucose is calculated by comparing the increase of blood sugar level at two hours after ingestion of the food with the GI value of the pure glucose and is indicated by percentage (%). Generally, food with a GI value higher than 60 is defined as a high-GI food, and food with a GI value lower than 30 is defined as a low-GI food. High-GI foods tend to cause raised blood sugar level and increased secretion of insulin to finally result in accumulation of body fat. The following table 1 lists the GI values of some common foods.

| Food | Reference food: White bread (GI=100) |
|---|---|
| Cereals | whole wheat breakfast cereals: 43±3; instant noodle: |
| | 67±2; taro: 79±2; oatmeal: 83±5; baked potato: 85±4; |
| | sweet potato: 87±10; cornflakes: 90±15; white rice: |
| | 91±9; French fried potato: 107±6; glutinous rice: 132±9 |
| Snacks | peanut: 21±12; nut: 31; peanut: 47; chocolate: 61±4; |
| | potato chip: 77±4; popcorn: 103±24 |
| Carbohydrate beverages | cola: 83±7; soda water: 97 |
| Sugars | xylitol: 11±1; fructose: 27±4; lactose: 66±3; honey: |
| | 78±7; sucrose (cane sugar): 97±7; glucose: 141±4 |

Therefore, people pay more attention to limited intake of sugar and the GI values of different foods. That is why many sugar substitutes are produced. Sugar substitutes can be generally divided into high-intensity sweeteners and low-intensity sweeteners. Most common high-intensity sweeteners are synthetic, such as aspartame, saccharine, sucralose, and neotame. Natural high-intensity sweeteners include stevia and Siraitia grosvenorii extracts (i.e. mogrosides). Common natural low-intensity sweeteners include cane sugar and xylitol. A main problem with the natural high-intensity sweeteners is that their sweet taste is different from that of cane sugar and has a slightly bitter after taste that lasts long to produce an unpleasant mouth feel. People generally refuse to use the synthetic high-intensity sweeteners because of the potential risk of damaging users' health. While stevia is a natural high-intensity sweetener, its sweet taste is quite different from that of cane sugar and the bitter after taste thereof is strong and lasts long, and therefore has generally poor sweet quality. According to reports in recent years, it is found stevia might cause cancer and infertility, preventing people to widely use it.

Siraitia grosvenorii extracts (i.e. mogrosides) has sweet taste very close to that of cane sugar and the bitter after taste thereof is minor. However, mogrosides have an aroma similar to licorice root, a plant root used as a traditional Chinese medicine, which might not be accepted by some people. According to records in some literatures, siraitia grosvenorii is good for health. In traditional Chinese medicine, siraitia grosvenorii acts as a remedy for heat stroke, wets the lungs, removes phlegm, stops cough, and aids defecation. Siraitia grosvenorii has been used as edible food for over one thousand years in China, and there is not any reported negative side effect of it on human body health, proving its safety for eating. Recent researches also find Siraitia grosvenorii works as an antioxidant, helps to prevent cancer, and is useful against some viruses.

It has found that mogrosides extracted from the fruits of genus siraitia are natural calorie-free sweeteners having a GI value of zero. Different species of the genus siraitia include siraitia grosvenorii, S. siamensis, S. silomaradjae, S. sikkimensis, S. africana, S. borneensis, and S. taiwaniana. Synonyms of the binominal name of siraitia grosvenorii include momordica grosvenorii and thladiantha grosvenorii. Siraitia grosvenorii extracts (i.e. mogrosides) include mogroside V, mogroside IV, siamenoside, 11-oxo-mogroside V, etc. All of these mogrosides are high-intensity sweeteners. Among others, mogroside V (having a molecular formula of mogrol-3-O-(beta-D-glucopyranosyl(1-6)-beta-D-glucopyranoside)-24-O-((beta-D-glucopyranosyl(1-2))-(beta-D-glucopyranosyl(1-6))-beta-D-glucopyranoside) has a sweetness that is 400 times as sweet as cane sugar. However, there are some problems that must be overcome before siraitia grosvenorii extracts (i.e. mogrosides) can be applied to foods. One of the problems is that the after taste of mogrosides with minor bitterness and licorice aroma would adversely affect the users' mouth feel and accordingly the wide acceptance by the market. Another problem is that, in view that the sweetness of mogrosides is several hundred times as high as that of the cane sugar and therefore only a very small amount will be needed in each use, mogrosides must be diluted for they to be applied to actual sweet products and meet the actual need in use. For example, when the produced mogrosides are to be packaged as sugar substitute packets for single use, they must be prepared with proper diluent at appropriate ratio.

Erythritol has the advantages of having a GI value of zero and very low caloric content close to zero, and has drawn the attention of health lovers. In recent years, erythritol has been used in some expensive cakes, beverages, sugar substitute packets and other sugar substitute products, and is emphasized by its usefulness to health. Erythritol can not be utilized by bacteria in oral cavity and is therefore also good for oral cavity and teeth health. Erythritol exists naturally at low levels in many fruits and fermented foods. In the past years, erythritol was produced by fermenting glucose. While erythritol has the advantage of having sweet taste highly similar to that of cane sugar, its sweetness is only 0.7 times as high as that of cane sugar and lasts only a very short time. And, erythritol has an after taste with an astringent aroma. Generally speaking, erythritol has the disadvantages of high selling price compared to cane sugar, low sweetness that does not last long, after taste with an astringent aroma to cause poor mouth feel, relatively low water solubility, possibly causing discomfort to abdomen or laxity.

Erythritol has a water solubility of 30%w/w only, while cane sugar can dissolve in water at any sugar/water ratio. Therefore, being limited by its low water solubility and low sweetness, erythritol might not be able to provide sufficient sweetness when it is used as a sweetener for food. Further, for example, due to its low sweetness, more packets must be used when erythritol is packaged into sugar substitute packets for single use. The increased quantity of erythritol requires more time to dissolve and tends to cause discomfort to the user's abdomen. These disadvantages inevitably have adverse influence on the consumers' acceptance of erythritol. One solution to these problems is to use erythritol along with another appropriate high-intensity sweetener. It would be most preferable the high-intensity sweetener used along with erythritol is good for health and can work with erythritol to create synergy to obtain enhanced or magnified sweetening effect.

Up to now, not many sweeteners are found as being able to work together to create synergy. However, it has been found erythritol can be used with aspartame or ACE-K to create synergy to obtain magnified sweetening effect. From the synergistic action, the sweetness can be increased by about 30% of the theoretic value. That is, the use quantity and cost of the sweetener can be reduced by 20%.

It is therefore tried by the inventor to develop an optimized sugar substitute composition that is prepared using natural siraitia grosvenorii extracts (i.e. mogrosides) and erythritol at appropriate ratios. Since erythritol has low GI and is good for health, and can act as a diluent and work with mogrosides to create synergy to obtain magnified sweetening effect, the optimized sugar substitute composition would be able to substitute for cane sugar or other commercially available artificial sweeteners and be used in foods, beverages, seasonings, and various food additives as high-quality sweetener thereof. The optimized sugar substitute composition developed by the inventor is believed to be helpful in user's health and in upgrading dietary quality of people in the modern society.

### SUMMARY OF THE INVENTION

A primary object of the present invention is to provide an optimized sugar substitute composition containing siraitia grosvenorii extracts (i.e. mogrosides) and erythritol, the latter is able to cover the bitter after taste of mogrosides and can work with mogrosides to create synergy to obtain magnified sweetening effect.

In the optimized sugar substitute composition according to the present invention, one of the components of siraitia grosvenorii extracts is mogroside V, which is 400 times as sweet as cane sugar and has no caloric content. By adding erythritol to mogrosides as a diluent at different ratios, products with proper sweetness can be prepared.

In the optimized sugar substitute composition according to the present invention, the preparation ratio of mogroside V to erythritol is ranged between 50:50 and 0,1:99,9.

In the optimized sugar substitute composition according to the present invention, siraitia grosvenorii extracts (i.e. mogrosides) and erythritol are characterized by a GI value of zero and very low caloric content close to zero.

To the optimized sugar substitute composition according to the present invention, a type of water-soluble dietary fibers can be further added. The dietary fibers can be glucose, fructose, galactose, or polymers of the derivatives thereof having an average molecular mass smaller than 11,000 Daltons for diluting mogrosides, so as to increase the total weight of the sugar substitute composition.

To the optimized sugar substitute composition according to the present invention, other sweeteners can be further added with the total sweetness of the added sweeteners not larger than the total sweetness provided by siraitia grosvenorii extracts (i.e. mogrosides) and erythritol.

### DETAILED DESCRIPTION OF THE PREFERRED EMBODIMENTS

In a first embodiment of the present invention, 100kg of siraitia grosvenorii extracts (i.e. mogrosides) and 900kg of erythritol are evenly mixed, and then, the mixture is packaged into individual packets having different weights, including 25kg, 5kg, 1kg, 500g, 8g, 1g, and 0.5g. Paper, plastics, rubber, glass, metal packaging materials, various natural packaging materials, various synthetic packaging materials, or any combination thereof can be used as the material for packaging the individual packets.

In a second embodiment of the present invention, 200kg of siraitia grosvenorii extracts (i.e. mogrosides) and 400kg of water-soluble dietary fiber (Fibersol®-2) are evenly mixed, the mixture is then evenly mixed with 600kg of erythritol. The obtained mixture is then packaged into individual packets having different weights, including 25kg, 5kg, 1kg, 500g, 8g, 1g, and 0.5g. Paper, plastics, rubber, glass, metal packaging materials, various natural packaging materials, various synthetic packaging materials, or any combination thereof can be used as the material for packaging the individual packets.

In a third embodiment of the present invention, 1kg of siraitia grosvenorii extracts (i.e. mogrosides) and 2kg of water-soluble dietary fiber (Orafti® inulin) are evenly mixed, the mixture is then evenly mixed with 3kg of erythritol. The obtained mixture is then dissolved in 1794kg of bean milk. The solution is then boiled and sterilized, and allowed to cool before being packaged into individual packets. Paper, plastics, rubber, glass, metal packaging materials, various natural packaging materials, various synthetic packaging materials, or any combination thereof can be used as the material for packaging the individual packets.

In a fourth embodiment of the present invention, 1kg of siraitia grosvenorii extracts (i.e. mogrosides) and 2kg of water-soluble dietary fiber (Orafti® inulin) are evenly mixed, the mixture is then evenly mixed with 3kg of erythritol. The obtained mixture is then dissolved in 2994kg of green tea. The solution is then boiled and sterilized, and allowed to cool before being packaged into individual packets. Paper, plastics, rubber, glass, metal packaging materials, various natural packaging materials, various synthetic packaging materials, or any combination thereof can be used as the material for packaging the individual packets.

In a fifth embodiment of the present invention, an original recipe for Greek snowball cookies including 471g of butter, 118g of icing sugar, 39g of yolk, 29g of whisky, 589g of plain flour, 18g of baking powder and 236g of crushed nut is changed to include 370g of butter, 4.1g of a composition consisting of mogrosides and erythritol at a ratio of 25:75, 165g of water-soluble dietary fiber (Orafti® inulin), 50g of oligofructose, 39g of yolk, 29g of whisky, 389g of plain flour, 200g of whole-wheat flour, 18g of baking powder and 236g of crushed nut.

Some experiments conducted on the synergy created by mogrosides and erythritol included in the optimized sugar substitute composition are described below.

### Experiment 1: Comparison of the sweetness of siraitia grosvenorii extracts, erythritol, and cane sugar

Trained testers: 3 persons

Materials: Siraitia grosvenorii extracts (containing total 80% of different mogrosides with 25% of mogroside V), erythritol 99%, and cane sugar 99.7%

### Experimental steps:

Basic sweetness test: Prepare a 10% (w/w) cane sugar water solution and a 10% (w/w) erythritol water solution to serve as comparison standards. Then, prepare a 1% (w/w) mogroside water solution. The 1% (w/w) mogroside water solution is diluted by different dilution factors until the solution has sweetness the same as that of the comparison standards.

### Experimental results:

The sweetness ratio of cane sugar to Siraitia grosvenorii extracts (containing total 80% of different mogrosides) is 1:100; and the sweetness ratio of erythritol to Siraitia grosvenorii extracts (containing total 80% of different mogrosides) is 1:160.

### Discussion:

Since the sweetness ratio of erythritol to cane sugar is about 0.7, the above experimental result matches the result reported in other available literatures. Since mogroside V is 400 times as sweet as cane sugar, the 25% of mogroside V contained in siraitia grosvenorii extracts will provide sweetness about 100 times as high as the cane sugar, while the remaining 10 times of sweetness is provided by other mogrosides contained in siraitia grosvenorii extracts. Therefore, in the total 80% of different mogrosides, the 25% of mogroside V provides 90% of the sweetness of the whole siraitia grosvenorii extracts while the remaining 55% of other mogrosides provides only about 10% of the sweetness of the whole siraitia grosvenorii extracts. From this experimental result, it can be seen that the sweetness of siraitia grosvenorii extracts is determined mainly by mogroside V.

### Experiment 2: The synergy created by a composition consisting of siraitia grosvenorii extracts and erythritol

### Experimental steps:

In general sweetness experiments, sucrose equivalent value (SEV) is used to express the sweetness. However, in the experiment 2, erythritol equivalent value (EEV) is used to express the sweetness, in order to simplify the experiment and reduce the possible error in mouth feel due to the minor difference in sweet taste between cane sugar and erythritol.

Prepare erythritol water solutions P (8%), Q (9%), R (10%), I (11%), II (12%), III (13%), IV (14%), V (15%), and VI (16%) (w/w) containing different amounts of erythritol to serve as standards in comparison of sweetness. Then, prepare different water solutions as listed in the following Table 2 for comparing with the comparison standards.

The water solutions A, B, C, D, E, F, G and H as listed in Table 2 are water solutions having a theoretical value for sweetness intensity calculated based on EEV and equivalent to the sweetness of 10% (w/w) erythritol water solution. Therefore, while the water solutions A, B, C, D, E, F, G and H respectively contain siraitia grosvenorii extracts and erythritol at different ratios and weights, the calculated theoretical value for the sweetness intensity thereof is the same and equals to the sweetness of the 10% (w/w) erythritol water solution.

### Calculation method:

The sweetness ratio of erythritol to siraitia grosvenorii extracts is 1:160.

Taking the water solution containing erythritol and siraitia grosvenorii extracts at a ratio of 95:5 as an example, the EEV of this water solution is 1x95%+160x5%=8.95. To prepare 1000g of this water solution, the required quantity of erythritol for adding to water is (100x95%)/8.95; and the required quantity of siraitia grosvenorii extracts for adding to water is (100x5%)/8.95.

After the erythritol and siraitia grosvenorii extracts are mixed, add water to make up the remaining weight so as to obtain the desired water solution having a total weight of 1000g. The obtained water solution has a theoretical value for the sweetness intensity equals to the sweetness of the 10% (w/w) erythritol water solution.

The synergy created by erythritol and siraitia grosvenorii extracts contained in the optimized sugar substitute composition according to the present invention to produce magnified sweetness is shown in the experiments listed in the following Table 2. As can be found from these experiments, when different water solutions are prepared at appropriate ratios of erythritol to siraitia grosvenorii extracts, synergy can be created to magnify the sweetness of the prepared water solution.

**Table 2**

| | Ratio of erythritol to mogrosides | EEV* | Erythritol (g/1000g water solution) | Mogrosides (g/1000g water solution) | Sweetness | Synergy (sweetness increased by %) |
|---|---|---|---|---|---|---|
| A | 99.5 : 0.5 | 1.795 | 55.432 | 0.2786 | R<A<I | Between 0~10%, Slightly higher than 0% |
| B | 99 : 1 | 2.59 | 38.224 | 0.3861 | I<B<II | Between 10~20%, closer to 10% |
| C | 95 : 5 | 8.95 | 10.6145 | 0.5587 | I<C<II | Between 10~20%, closer to 20% |
| D | 85 : 15 | 24.85 | 3.4205 | 0.6036 | II<D<III | Between 20~30% |
| E | 75 : 25 | 40.75 | 1.8405 | 0.6135 | E≒ III | About 30% |
| F | 50 : 50 | 80.5 | 0.6211 | 0.6211 | F≒ III | About 30% |
| G | 15: 85 | 136.15 | 0.1102 | 0.6243 | R<G<I | Between 0~10% |
| H | 1 : 99 | 158.41 | 0.0063 | 0.625 | H≒ R | About 0% |

| | | | | | | |
|---|---|---|---|---|---|---|
| * EEV: Erythritol Equivalent Value, using 10% w/w erythritol water solution as a comparison standard. | | | | | | |

Sweetness ratio of erythritol to mogrosides = 1:160.

It can be found from Table 2 that the synergy is created when the content ratio of mogrosides to erythritol is ranged between 85:15 and 0.5:99.5. Since siraitia grosvenorii extracts (i.e. mogrosides) contain 25% of mogroside V and the sweetness is largely provided by mogroside V, it is able to derive that the synergy is created when the content ratio of mogroside V to erythritol is ranged between 50:50 and 0,1:99,9.

The following Table 3 shows the comparison of the sweet taste produced by the composition of the present invention containing erythritol and siraitia grosvenorii extracts with that of other types of sweetener as obtained from experiments and analyses.

**Table 3**

| Sweetener | Sweet taste | After taste | Conclusion |
|---|---|---|---|
| Cane sugar | Good sweet taste lasts for a medium time | Sweet after taste lasts for a short time | |
| Erythritol | Sweet taste lasts for a very short time and turns into an astringent aroma with low acceptability | Astringent after taste without any sweetness | Has poor sweet taste with low acceptability |
| siraitia grosvenorii extracts | Good sweet taste is similar to that of cane sugar and lasts for a long time | Sweet after taste lasts for a long time, but is slightly bitter and has an aroma similar to licorice root | Has good sweet taste but with some degree of bitterness and aroma of licorice root |
| Erythritol and siraitia grosvenorii extracts | Good sweet taste is very close to that of cane sugar and lasts for a long time | Sweet after taste is close to cane sugar and lasts for a long time without any astringent aroma (even if there is 99.5% of erythritol) or bitterness or licorice root aroma (even if there is 85% of siraitia grosvenorii extracts) | Has good sweet taste almost the same as that of cane sugar and lasting for a long time to possibly reduce the actual use amount |

The sugar substitute composition containing erythritol and siraitia grosvenorii extracts according to the present invention produces very good sweet taste, and the astringent aroma in the after taste of erythritol and the minor bitterness and licorice root aroma in the after taste of siraitia grosvenorii extracts are obviously reduced in the composition. When the content ratio of siraitia grosvenorii extracts (i.e. mogrosides) to erythritol is ranged between 85:15 and 0.5:99.5, that is, when the content ratio of mogroside V to erythritol is ranged between 50:50 and 0,1:99,9, the sweet taste and the after taste of the composition are also improved.

It is also possible to add a type of water-soluble dietary fibers to the composition of the present invention containing erythritol and siraitia grosvenorii extracts. The water-soluble dietary fibers can be glucose, fructose, galactose, or polymers of the derivatives thereof having an average molecular mass smaller than 11,000 Daltons for diluting the composition of mogrosides and erythritol, so as to increase the total weight of the sugar substitute composition. The water-soluble dietary fibers must possess two features: (1) being water soluble, so that the dietary fiber added to a beverage would not have any adverse influence on the original transparency and quality of the beverage; and (2) preferably having no or only very low caloric content, lest the dietary fibers should increase the caloric content of the sugar substitute composition of the present invention.

According to the present invention, it is also possible to add other sweeteners to the composition containing erythritol and mogrosides with the added sweeteners have total sweetness intensity not higher than that provided by siraitia grosvenorii extracts (i.e. mogrosides) and erythritol.

In conclusion, since the optimized sugar substitute composition according to the present invention uses natural mogrosides as a sugar substitute and uses health-giving erythritol as a diluent, it can not only substitute for the currently commercially available sugar or artificial sweeteners to increase the sweet taste of foods, but also help in upgrading people's dietary quality to bring health benefits to people living in the modern society.

The present invention has been described with some preferred embodiments thereof. However, it is understood these embodiment are not intended to restrict the scope of the present invention and many changes and modifications in the described embodiments can be carried out without departing from the scope and the spirit of the invention that is intended to be limited only by the appended claims.

## Claims

1. An optimized sugar substitute composition, comprising siraitia grosvenorii extracts, i.e. mogrosides, and at least one species of erythritol; wherein the mogrosides includes mogroside V, and a content ratio of mogroside V to erythritol is ranged between 50:50 and 0,1:99,9.

2. The optimized sugar substitute composition as claimed in claim 1, wherein the siraitia grosvenorii extracts or mogrosides are extracted from fruits of genus siraitia, including, but not limited to, siraitia grosvenorii, S. siamensis, S. silomaradjae, S. sikkimensis, S. africana, S. borneensis, and S. taiwaniana.

3. The optimized sugar substitute composition as claimed in claim 1, wherein the composition has a type of water-soluble dietary fibers added thereto.

4. The optimized sugar substitute composition as claimed in claim 1, wherein the composition has other sweeteners added thereto with total sweetness intensity of the added sweeteners not higher than that provided by siraitia grosvenorii extracts or mogrosides and erythritol.
